# EUROPÄISCHE PATENTSCHRIFT

(11) **EP 4 497 183 B1**
(45) Veröffentlichungstag und Bekanntmachung des Hinweises auf die Patenterteilung: **30.07.2025**
(21) Anmeldenummer: 23742179.7
(22) Anmeldetag: 12.06.2023
(51) Int. Cl.: H02J 1/12, H02J 3/00

(54) **BRENNSTOFFZELLENANLAGE UND VERFAHREN FÜR EINE BRENNSTOFFZELLENANLAGE**
FUEL-CELL INSTALLATION AND METHOD FOR A FUEL-CELL INSTALLATION
INSTALLATION DE PILES À COMBUSTIBLE ET PROCÉDÉ POUR UNE INSTALLATION DE PILES À COMBUSTIBLE

(30) Priorität: 13.06.2022 AT 504122022
(43) Veröffentlichungstag der Anmeldung: 29.01.2025
(73) Patentinhaber: AVL List GmbH, 8020 Graz (AT)
(72) Erfinder: PLANITZER, Stefan, 8130 Frohnleiten (AT)
(86) Internationale Anmeldenummer: PCT/AT2023/060182
(87) Internationale Veröffentlichungsnummer: WO 2023/240300

(56) Entgegenhaltungen:
- EP-A1- 3 333 951
- EP-B1- 1 968 142
- DE-A1- 10 106 219
- DE-A1- 102013 207 349
- DE-A1- 102019 111 462

## Beschreibung

Die vorliegende Erfindung betrifft eine Brennstoffzellenanlage und ein Verfahren zur Lastpunktsicherstellung von Brennstoffzellenstapeln eines Brennstoffzellensystems einer Brennstoffzellenanlage bei Auftreten einer Störung, insbesondere einer Netzstörung eines elektrischen Ausgangsnetzsystems.

Aus dem Stand der Technik sind Anwendungen bekannt, bei denen von SOFC-Brennstoffzellenstapeln (Abkürzung SOFC steht im Englischen für "Solid Oxide Fuel Cell", auf Deutsch Festoxidbrennstoffzelle) erzeugte elektrische Energie in ein Wechsel- und Drehstromnetz eingespeist werden.

Die Leistungsdynamik solcher Brennstoffzellenstapel ist gering. Dafür gibt es mehrere Gründe, etwa die Gefahr der Rissbildung der Zellen durch steile Temperaturgradienten, die bei Lastsprüngen entstehen können. Deswegen können diese Brennstoffzellenstapel keinen raschen elektrischen Laständerungen folgen.

Neben den Brennstoffzellenstapeln selbst kann auch das Brennstoffzellensystem insgesamt durch einen plötzlichen Lastabwurf beschädigt werden. Das Brenngas kann in diesem Fall nicht in elektrische Energie umgesetzt werden und führt z.B. beim Oxidationskatalysator im Brennstoffzellensystem zu einer unzulässigen Erwärmung und im schlimmsten Fall zur kompletten Zerstörung.

Die Gefahr, die Brenngasenergie nicht in elektrische Energie umzuwandeln besteht auch im Falle eines Einspeisenetzausfalles. Anforderungen zur Netzstabilität die durch lokale und sog. "Grid Codes" festgeschrieben sind machen ein spezielles elektrisches Design für diese Situationen ebenfalls notwendig (z. B. sog. Low Voltage Ride Through).

Weitere Brennstoffzellenanlagen und Verfahren zur Lastpunktsicherstellung von Brennstoffzellenstapeln eines Brennstoffzellensystems solcher Brennstoffzellenanlagen sind beispielsweise aus der DE 102013207349 A1, der EP 1968142 B1, der DE 10106219 A1, der EP 3333951 A1 und der DE 102019111462 A1 bekannt.

Es ist Aufgabe der vorliegenden Erfindung, eine Brennstoffzellenanlage mit einem einfachen, kostengünstigen und derart optimierten elektrischen Design anzugeben, dass eine Störung, insbesondere einer Netzstörung, insbesondere ein Netzausfall, keine Beschädigung der Brennstoffzellenanlage zur Folge hat.

Die voranstehende Aufgabe wird gelöst durch eine Brennstoffzellenanlage mit den Merkmalen des Anspruchs 1 und ein Verfahren mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Brennstoffzellenanlage beschrieben sind, selbstverständlich auch im Zusammenhang mit dem erfindungsgemäßen Verfahren und umgekehrt, sodass bzgl. der Offenbarung zu den einzelnen Erfindungsaspekten stets wechselseitig Bezug genommen wird oder werden kann.

Erfindungsgemäß ist eine Brennstoffzellenanlage mit einem Brennstoffzellensystem vorgesehen. Das Brennstoffzellensystem umfasst eine Vielzahl von Brennstoffzellenstapeln, wobei das Brennstoffzellensystem zum Versorgen eines elektrischen Ausgangsnetzes mit durch den Betrieb der Brennstoffzellenstapel erzeugter elektrischer Energie elektrisch mit einem elektrischen Ausgangsnetzsystem, welches ein elektrisches Ausgangsnetz umfasst, verbunden oder verbindbar ist. Die Brennstoffzellenanlage umfasst ferner ein elektrisches Leistungswiderstandsnetz, welches einen elektrischen Leistungswiderstand zur Lastpunktsicherstellung der Brennstoffzellenstapel bei Auftreten einer Störung, insbesondere einer Netzstörung des elektrischen Ausgangsnetzsystems, insbesondere des elektrischen Ausgangsnetzes, umfasst, wobei das Brennstoffzellensystem zum Versorgen des elektrischen Leistungswiderstandsnetzes mit durch den Betrieb der Brennstoffzellenstapel erzeugter elektrischer Energie elektrisch mit dem elektrischen Leistungswiderstandsnetz verbunden ist.

Demgemäß wird erfindungsgemäß eine Brennstoffzellenanlage bereitgestellt, bei der die Brennstoffzellenstapel bei einer Störung, insbesondere einer Netzstörung wie insbesondere einem Netzausfall, ihren Betriebspunkt oder Lastpunkt nicht verlassen müssen. Zumindest müssen die Brennstoffzellenstapel ihren Lastpunkt nicht über das gemäß ihrer Leistungsdynamik vorbestimmte Maß ändern, welches noch als unschädlich in Bezug auf das Risiko einer möglichen Beschädigung des Brennstoffzellensystems angesehen werden kann. Eine Netzstörung ist dabei dadurch charakterisiert, dass nur eine reduzierte Menge oder, insbesondere bei einem Netzausfall, keine elektrische Energie in das elektrische Ausgangsnetz fließen kann. Ein solcher Netzausfall kann beispielsweise bei einem Kurzschluss außerhalb der Brennstoffzellenanlage auftreten. An das elektrische Ausgangsnetz wird von den Brennstoffzellenstapeln erzeugte elektrische Energie im normalen Betrieb abgeführt, sodass es hierin als Ausgangsnetz bezeichnet wird. Alternativ kann es aber auch beispielsweise als Einspeisenetz bezeichnet werden. Kann die erzeugte Leistung also durch eine Netzstörung nicht mehr in das elektrische Ausgangsnetz, insbesondere ein Wechsel- und/oder Drehstromnetz, abgeführt werden, kann die überschüssige Energie dem elektrischen Leistungswiderstand zugeführt werden. Wird die Netzstörung behoben, kehrt die Netzspannung zurück und die elektrische Energie kann statt in den elektrischen Leistungswiderstand wieder in das elektrische Ausgangsnetz fließen.

Die erfindungsgemäße Brennstoffzellenanlage betrifft insbesondere die Lastpunktsicherung von Brennstoffzellenstapel eines Brennstoffzellensystems einer Brennstoffzellenanlage bei einer Netzstörung eines elektrischen Ausgangsnetzes, kann vorteilhaft aber auch bei nicht netzgebundenen System zur Lastpunktsicherung verwendet werden. Alle Merkmale, die im Zusammenhang mit einem Auftreten eine Netzstörung beschrieben sind, sind folglich vorteilhaft auch bei nicht netzgebundenen Systemen anwendbar.

Die Brennstoffzellenstapel können ganz besonders Festoxid-Brennstoffzellenstapel sein. Damit kann das Brennstoffzellensystem insbesondere ein Festoxid-Brennstoffzellensystem oder Festoxid-Elektrolyseurzellensystem (auch SOFC-System für engl. "Solid Oxide Fuel Cell System") sein. Außerdem können die einzelnen Brennstoffzellenstapel parallel miteinander elektrisch verbunden sein, insbesondere über den später näher erläuterten elektrischen (Spannungs-)Zwischenkreis. Möglich ist aber alternativ auch, einzelne oder alle der Brennstoffzellenstapel in Reihe miteinander elektrisch zu verbinden.

Bevorzugt ist, dass der elektrische Leistungswiderstand dazu eingerichtet ist, elektrische Energie in Abwärme umzuwandeln. So kann die überschüssige elektrische Energie, die bei der Netzstörung nicht von der Brennstoffzellenanlage über das elektrische Ausgangsnetz abgeführt werden kann, auf vorteilhafte Art und Weise aus der Brennstoffzellenanlage entfernt werden, nämlich als Abwärme. Abwärme meint daher insbesondere, dass die aus der elektrischen Energie in Wärmeenergie umgewandelte Wärme abgeführt wird. Ganz besonders wird die Abwärme nach außerhalb der Brennstoffzellenstapel und des Brennstoffzellensystems abgeführt. Die Abwärme wird also vorzugsweise nicht etwa den Brennstoffzellenstapeln zugeführt, was deren Effizienz zwar erhöhen könnte, aber nicht zielführend wäre, weil dann mehr elektrische Energie in Abwärme umgewandelt werden müsste.

Ferner ist bevorzugt, dass der elektrische Leistungswiderstand außerhalb der Brennstoffzellenstapel angeordnet ist. Wie zuvor erwähnt ist dies vorteilhaft, um die von dem elektrischen Leistungswiderstand erzeugte Wärme nicht in den Brennstoffzellenstapeln zu nutzen. Stattdessen kann vorteilhafterweise Bauraum außerhalb des Brennstoffzellensystems mit den Brennstoffzellenstapeln für das elektrische Leistungswiderstandsnetz genutzt werden. Auch kann dort eine optionale Kühlung bauraumtechnisch besser platziert und dimensioniert werden.

So ist außerdem bevorzugt, dass die Brennstoffzellenanlage eine Kühleinheit zum Kühlen des elektrischen Leistungswiderstandes umfasst. Die Kühleinheit kann eine Luft- und/oder Wasserkühleinheit sein, also zum Kühlen mittels Luft, insbesondere Umgebungsluft, und/oder Wasser eingerichtet sein. Als Wasser wird im Rahmen der Erfindung vorteilhaft ein beliebiges Kühlmittel verstanden, welches insbesondere flüssig ist. Die Luft kann beispielsweise mittels eines Gebläses zirkuliert werden. Das Wasser kann mittels eines Kälteaggregats aktiv gekühlt werden. Dadurch kann eine besonders hohe Menge von elektrischer Energie an den elektrischen Leistungswiderstand abgeführt werden, ohne dass dieser beschädigt wird, wie es insbesondere bei Netzausfällen vorteilhaft ist, bei denen keinerlei elektrische Energie mehr über das elektrische Ausgangsnetz abgeführt werden kann. Grundsätzlich kann es auch vorteilhaft sein, wenn die Kühlung durch natürliche Konvention erfolgt.

Vorteilhaft ist außerdem, wenn das elektrische Leistungswiderstandsnetz eine Leistungselektronik umfasst, die dazu eingerichtet ist, den elektrischen Leistungswiderstand beim Auftreten der Netzstörung zu aktivieren. Aktivieren des elektrischen Leistungswiderstandes meint dabei das Zuführen von elektrischer Energie, die von dem Brennstoffzellensystem erzeugt wird, zum elektrischen Leistungswiderstand, sodass dieser die elektrische Energie abführt, insbesondere in Abwärme umwandelt oder, mit anderen Worten, Wärmeenergie umwandelt und abführt.

Ganz besonders ist dabei bevorzugt, dass die Leistungselektronik dazu eingerichtet ist, kontinuierlich eine Spannung in einem elektrischen Zwischenkreis zwischen dem Brennstoffzellensystem und dem elektrischen Ausgangsnetzsystem zu messen und beim Auftreten eines Spannungsanstiegs in dem elektrischen Zwischenkreis den elektrischen Leistungswiderstand zu aktivieren. Der elektrische Zwischenkreis kann insbesondere ein DC-Zwischenkreis sein. So kann die Leistungselektronik die Störung anhand einer Spannungsmessung und eines ggf. auftretenden Spannungsanstiegs sehr schnell ermitteln. Der elektrische Leistungswiderstand kann folglich mit minimalen Zeitverzug gegenüber dem Auftreten der Störung aktiviert werden, um eine Beschädigung der Brennstoffzellenanlage zu vermeiden. Der zum Aktivieren der Leistungselektronik notwendige Spannungsanstieg kann dabei insbesondere vordefiniert sein. Der Spannungsanstieg kann dabei insbesondere als absoluter maximaler Spannungswert und/oder als Spannungsänderung in einer vorgegebenen Zeitspanne vordefiniert sein. Folglich kann der elektrische Leistungswiderstand insbesondere dann aktiviert werden, wenn eine kontinuierlich gemessene Ist-Spannung einen vordefinierten maximalen absoluten Spannungswert überschreitet oder eine vorgegebene Spannungsänderung in einer vorgegebenen Zeitspanne erfährt.

Vorteilhafterweise weist die Leistungselektronik zudem einen Regler zum Regeln der dem elektrischen Leistungswiderstand zugeführten elektrischen Energie in Abhängigkeit von der im elektrischen Zwischenkreis gemessenen Spannung auf. So kann vorteilhafterweise die elektrische Energie nur insoweit an den elektrischen Leistungswiderstand abgeführt werden, wie das Ausmaß der Störung, insbesondere wenn kein Totalausfall bzw. Netzausfall vorliegt, es erfordert. Auch kann einfach festgestellt werden, wenn die Störung behoben ist und das elektrische Ausgangsnetzsystem wieder zur Verfügung steht.

Wenngleich das Brennstoffzellensystem beim Auftreten einer Netzstörung vorteilhaft im Betriebspunkt verbleibt, ist es auch vorteilhaft, wenn das Brennstoffzellensystem dazu eingerichtet ist, einen Lastpunkt der im Betrieb befindlichen Brennstoffzellenstapel beim Auftreten der Störung, insbesondere der Netzstörung herunterzufahren. Mit anderen Worten kann der Betriebspunkt der Brennstoffzellenstapel beim Auftreten der Störung, insbesondere der Netzstörung abgesenkt werden. Dies ermöglicht es, die elektrische Energie in der Brennstoffzellenanlage herabzusenken, die von den Brennstoffzellenstapeln produziert werden, um den elektrischen Leistungswiderstand zu entlasten und den Ressourcenverbrauch an den Brennstoffzellenstapeln zu reduzieren. Auch hier kann der zuvor erwähnte Regler oder ein anderer Regler zur Regelung der Lastpunkte der Brennstoffzellenstapel in Abhängigkeit der, insbesondere von der Leistungselektronik, gemessenen Spannung genutzt werden. Dabei kann eine Leistungsdynamik der Brennstoffzellenstapel berücksichtigt werden, sodass die Brennstoffzellenstapel in ihren Lastpunkten nicht über ihre Leistungsdynamik hinaus heruntergefahren werden, um eine Beschädigung der Brennstoffzellenstapel zu vermeiden. Die Leistungsdynamik gibt an, wie schnell ein Brennstoffzellenstapel in seiner Last beschädigungsfrei heruntergefahren werden kann. Sie ist also eine Betriebsvorgabe und kann beispielsweise durch Stromveränderungsraten angegeben werden.

Ferner ist es vorgesehen, dass das elektrische Leistungswiderstandsnetz in einem elektrischen Zwischenkreis zwischen DC/DC-Wandlern der Brennstoffzellenstapel und einem DC/AC-Wandler des elektrischen Ausgangsnetzsystems angeordnet ist, wobei der DC/AC-Wandler bidirektional ausgebildet und an das elektrische Ausgangsnetz angeschlossen ist, sodass elektrische Energie aus dem elektrischen Zwischenkreis an das elektrische Ausgangsnetz abführbar und aus dem elektrischen Ausgangsnetz in den elektrischen Zwischenkreis einspeisbar ist.

Insoweit kann die zuvor erwähnte Messung der Spannung in diesem elektrischen Zwischenkreis, insbesondere DC-Zwischenkreis, erfolgen. Die Spannung in dem elektrischen Zwischenkreis wird dabei vorteilhafterweise durch das elektrische Ausgangsnetzsystem auf eine konstante Spannung geregelt. Vorteilhafterweise weist der zumindest eine DC/AC-Wandler also einen Betriebsmodus konstanter Spannungserhaltung im elektrischen Zwischenkreis auf. Dabei können das elektrische Leistungswiderstandsnetz, die DC/DC-Wandler der Brennstoffzellenstapel und der DC/AC-Wandler parallel zueinander angeordnet sein. Möglich ist dabei, dass jedem Brennstoffzellenstapel jeweils ein DC/DC-Wandler zugeordnet ist oder, mit anderen Worten, mit diesem elektrisch verbunden ist. Möglich ist auch, dass mehrere elektrische Ausgangsnetze vorgesehen sind, wobei jedes elektrische Ausgangsnetz einen DC/AC-Wandler aufweisen kann. Es ist vorgesehen, dass der DC/AC-Wandler bidirektional funktionsfähig ist. Grundsätzlich können auch zwei hintereinander geschaltete DC/AC-Wandler vorgesehen sein, die unidirektional funktionsfähig sein können, jedoch in entgegengesetzte Richtungen arbeiten. So kann aus dem elektrische Ausgangsnetz bei Bedarf auch elektrische Energie gezogen werden, insbesondere zur Versorgung eines elektrischen Anlageperipherienetzes in den Phasen von Aufwärmen und Abkühlen der Brennstoffzellenstapel für den Betrieb der Brennstoffzellenanlage.

Vorteilhaft ist ferner, wenn die Brennstoffzellenanlage ein elektrischen Anlagenperipherienetz umfassend Anlagenperipherie zum Unterstützen eines Betriebs des Brennstoffzellensystems umfasst, wobei das Brennstoffzellensystem zum Versorgen des elektrischen Anlagenperipherienetzes mit der durch den Betrieb der Brennstoffzellenstapel erzeugten elektrischen Energie elektrisch mit dem elektrischen Anlagenperipherienetz verbunden ist. Auch das elektrische Anlagenperipherienetz kann dabei mit dem elektrischen Zwischenkreis verbunden sein und insbesondere parallel zum elektrischen Leistungswiderstandsnetz, dem Brennstoffzellensystem und dem elektrischen Ausgangsnetzsystem geschaltet sein. Die Anlagenperipherie wird im Englischen auch als "Balance of Plant" bezeichnet. Insbesondere kann die Anlagenperipherie mehrere oder sämtliche Komponenten des Brennstoffzellensystems, ausgenommen die Brennstoffzellenstapel selbst umfassen. Zu diesen Komponenten können beispielsweise Pumpen, Sensoren, Wärmetauscher, Dichtungen, Kompressoren, Rezirkulationsgebläse, Ladeluftkühler und Befeuchter gehören. Diese werden durch das Anlagenperipherienetz mit elektrischer Energie für ihren Betrieb versorgt, sodass diese Komponenten wiederum den ordnungsgemäßen Betrieb der Brennstoffzellenstapel zur Erzeugung elektrischer Energie nutzen können. Entsprechend ist die zuvor erwähnte Bidirektionalität des DC/AC-Wandlers im elektrischen Ausgangsnetzsystem vorteilhaft beim Anfahren und Ausschalten oder, mit anderen Worten, Aufwärmen und Abkühlen, der Brennstoffzellenstapel, da die Brennstoffzellenstapel selbst hier typischerweise keine oder nicht mehr genügend elektrische Energie erzeugen, um die Anlagenperipherie sicher mit elektrischer Energie zu versorgen. Ein elektrischer Speicher ist zwar optional vorsehbar, ist jedoch aufgrund der hohen notwendigen Kapazität eine kostenintensive Investition.

Ebenfalls Gegenstand der vorliegenden Erfindung ist ein Verfahren zur Lastpunktsicherstellung von Brennstoffzellenstapeln eines Brennstoffzellensystems einer erfindungsgemäßen Brennstoffzellenanlage bei Auftreten einer Störung, insbesondere einer Netzstörung eines elektrischen Ausgangsnetzsystems, welches mit durch den Betrieb der Brennstoffzellenstapel erzeugter elektrischer Energie versorgt wird. Das Verfahren weist die folgenden Schritte auf:
- Auftreten der Störung, insbesondere der Netzstörung des elektrischen Ausgangsnetzsystems,
- Feststellen der aufgetretenen Störung, insbesondere der Netzstörung, und
- Umwandeln von elektrischer Energie in der Brennstoffzellenanlage zwischen dem Brennstoffzellensystem und dem elektrischen Ausgangsnetzsystem mittels eines elektrischen Leistungswiderstands in Abwärme.

Damit bringt ein erfindungsgemäßes Verfahren die gleichen Vorteile mit sich, wie sie ausführlich mit Bezug auf die erfindungsgemäße Brennstoffzellenanlage erläutert worden sind.

Insbesondere kann die erfindungsgemäße Brennstoffzellenanlage zum Ausführen des erfindungsgemäßen Verfahrens eingerichtet bzw. ausgebildet sein. Anders herum kann das erfindungsgemäße Verfahren insbesondere in oder von einer erfindungsgemäßen Brennstoffzellenanlage ausgeführt werden.

Vorteilhafterweise kann die aufgetretene Störung, insbesondere die Netzstörung durch eine Messung eines Spannungsanstiegs in einem elektrischen Zwischenkreis zwischen dem Brennstoffzellensystem und dem elektrischen Ausgangsnetzsystem festgestellt werden.

Ferner vorteilhafterweise kann die von dem elektrischen Leistungswiderstand umgewandelte elektrischen Energie in Abhängigkeit von der im elektrischen Zwischenkreis gemessenen Spannung geregelt werden.

Schließlich können vorteilhafterweise die Lastpunkte der im Betrieb befindlichen Brennstoffzellenstapel nach Feststellen der Störung, insbesondere der Netzstörung im Rahmen der seitens der Brennstoffzellenstapel zur Verfügung stehenden Leistungsdynamik heruntergefahren werden. Wenn ein Leistungswiderstand ausreichend groß ausgelegt ist, kann es auch vorteilhaft sein, wenn der Lastpunkt unverändert beibehalten wird.

Weitere Vorteile, Merkmale und Einzelheiten der Erfindung ergeben sich aus der nachfolgenden Beschreibung, in der unter Bezugnahme auf die Zeichnungen Ausführungsbeispiele im Einzelnen beschreiben sind. Es zeigen schematisch:
- Fig. 1: einen Schaltplan einer erfindungsgemäßen Brennstoffzellenanlage,
- Fig. 2: einen Ausschnitt des Schaltplans der Brennstoffzellenanlage aus Fig. 1,
- Fig. 3: einen Leistungsverlauf in der Brennstoffzellenanlage aus Fig. 1, und
- Fig. 4: einen Schaltplan einer alternativen erfindungsgemäßen Brennstoffzellenanlage.
Identische oder funktionsgleiche Elemente sind in den Figuren 1 bis 4 jeweils mit demselben Bezugszeichen bezeichnet.

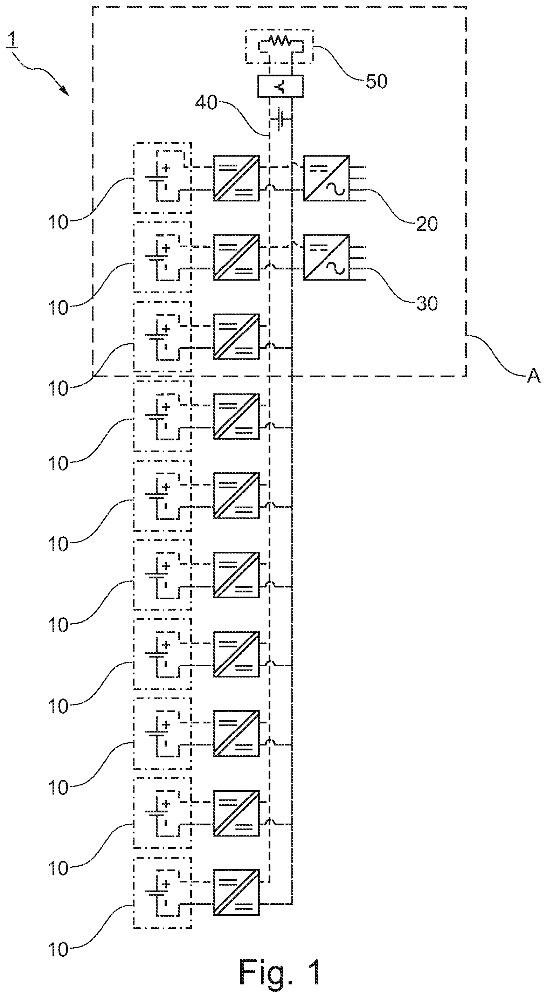

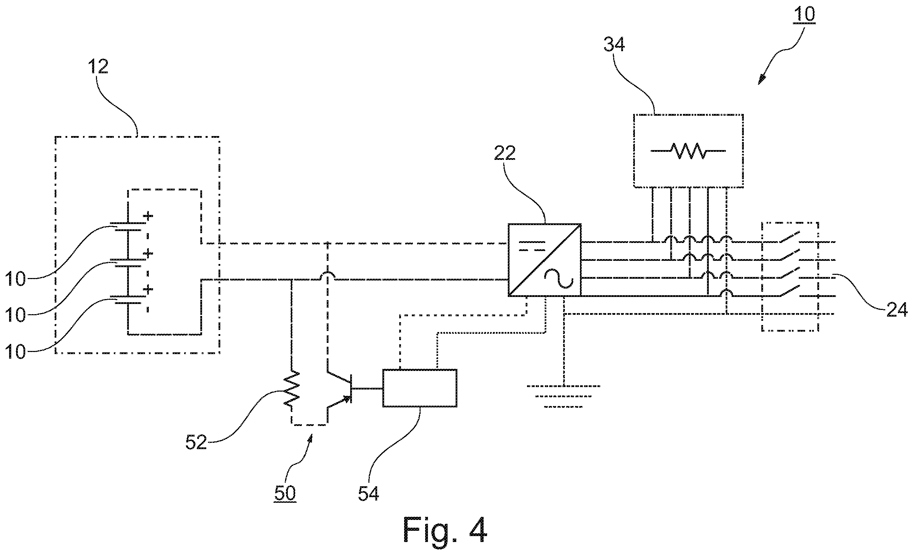

Figur 1 zeigt einen Schaltplan einer Brennstoffzellenanlage 1 gemäß einem Ausführungsbeispiel der Erfindung. Die Brennstoffzellenanlage 1 umfasst eine Vielzahl von Brennstoffzellenstapeln 10, die jeweils parallel zueinander mit einem elektrischen Zwischenkreis 40 verschaltet sind. Wie Fig. 4 als Alternative der Brennstoffzellenanlage 1 aus Fig. 1 zeigt, können die Brennstoffzellenstapel 10 alternativ aber auch in Reihe miteinander geschaltet sein.

Neben den Brennstoffzellenstapeln 10 sind ein elektrisches Ausgangsnetzsystem 20, ein elektrisches Anlagenperipherienetz 30 und ein elektrisches Leistungswiderstandsnetz 50 jeweils parallel zueinander und zu den Brennstoffzellenstapeln 10 mittels des elektrischen Zwischenkreises 40 verschaltet.

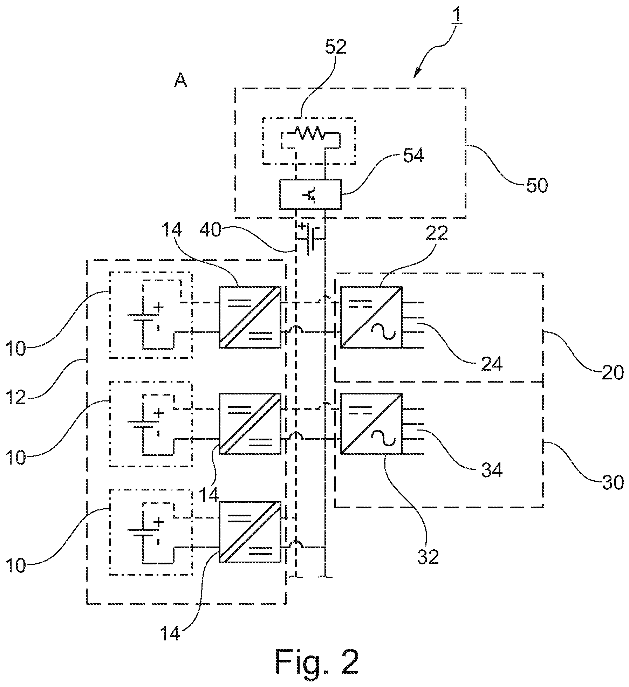

Figur 2 zeigt den in Fig. 1 mit dem Buchstaben A gekennzeichneten Ausschnitt der Brennstoffzellenanlage 1 der Fig. 1, die dort beispielhaft zehn Brennstoffzellenstapel 10 umfasst, wobei alternativ auch mehr oder weniger Brennstoffzellenstapel 10 vorhanden sein können. Fig. 2 zeigt demnach in einer Detailansicht nur noch beispielhaft drei Brennstoffzellenstapel 10, wobei die weiteren Brennstoffzellenstapel 10 der Fig. 1 hier nicht gezeigt sind oder alternativ entfallen können.

Die Brennstoffzellenstapel 10 sind Teil eines Brennstoffzellensystems 12, welches zudem DC/DC-Wandler 14 umfasst, wobei je einem Brennstoffzellenstapel 10 je ein DC/DC-Wandler 14 zugeordnet ist. Mittels je eines der DC/DC-Wandler 14 ist jeder der Brennstoffzellenstapel 10 so elektrisch mit dem elektrischen Zwischenkreis 40 verbunden, der vorliegend ein DC-Zwischenkreis ist (DC meint "Direct Current", auf Deutsch Gleichstrom oder Gleichspannung).

Das elektrische Ausgangsnetzsystem 20 weist seinerseits einen DC/AC-Wandler 22 auf, der an ein elektrisches Ausgangsnetz 24 angeschlossen ist. Der DC/AC - Wandler 22 ist als bidirektionaler DC/AC -Wandler 22 ausgebildet (AC meint "Alternating Current", auf Deutsch Wechselstrom oder Wechselspannung). Dadurch kann je nach Arbeitsrichtung des DC/AC -Wandlers 22 elektrische Energie oder, mit anderen Worten, elektrischer Strom aus dem elektrischen Zwischenkreis 40 an das elektrische Ausgangsnetz 24 abgeführt werden oder aus dem elektrischen Ausgangsnetz 24 in den elektrischen Zwischenkreis 40 eingespeist werden.

Das elektrische Anlagenperipherienetz 30 weist seinerseits Anlagenperipherie 34, wie beispielsweise Pumpen, Sensoren, Wärmetauscher, Dichtungen, Kompressoren, Rezirkulationsgebläse, Ladeluftkühler und/oder Befeuchter zum Unterstützen des Betriebs des Brennstoffzellensystems 12 auf. Die Anlagenperipherie 34 ist über einen Wandler 32 an den elektrischen Zwischenkreis 40 angeschlossen. Der Wandler 32 ist hier als ein DC/AC-Wandler ausgeführt, kann alternativ aber auch als ein DC/DC-Wandler ausgeführt sein.

Das elektrische Leistungswiderstandsnetz 50 weist einen elektrischen Leistungswiderstand 52 und eine Leistungselektronik 54 auf, die mit dem elektrischen Zwischenkreis 40 elektrisch verbunden sind. Die Leistungselektronik 54 kann ihrerseits verschiedene Komponenten aufweisen, wie insbesondere Spannungsmesser zum Messen der Spannung in dem elektrischen Zwischenkreis 40 und/oder einen Regler zum Regeln der dem elektrischen Leistungswiderstand 52 zugeführten elektrischen Energie aus dem elektrischen Zwischenkreis 40.

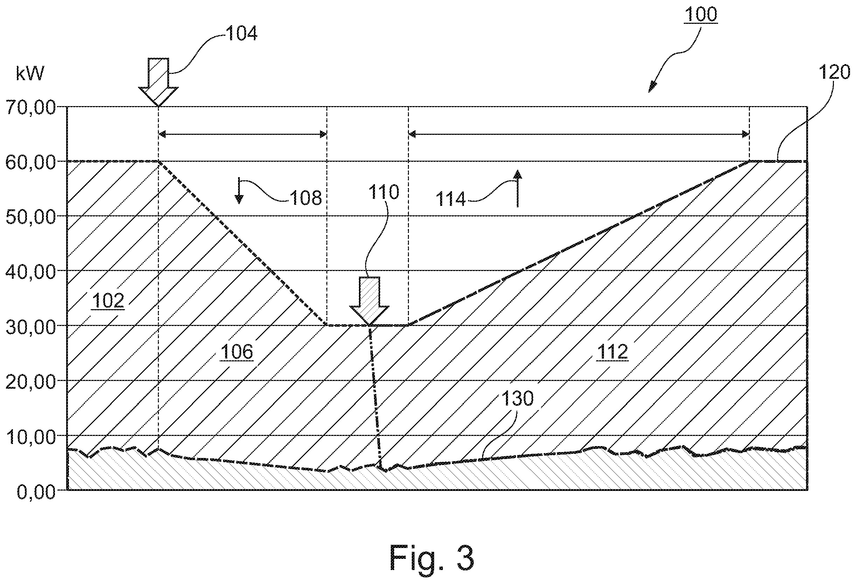

Figur 3 zeigt anhand eines Brennstoffzellensystem-Leistungsverlaufs 120 der Leistung in kW über der Zeit des Brennstoffzellensystems 12 und eines Anlagenperipherienetz-Leistungsverlaufs der Leistung in kW über der Zeit des Anlagenperipherienetzes 30 den Ablauf eines beispielhaft illustrierten Verfahrens 100 gemäß einem Ausführungsbeispiel der Erfindung.

In einem ersten Schritt 102 des Verfahrens wird dabei das Brennstoffzellensystem 12 mit voller Leistung betrieben und liefert hier beispielhaft 60 kW (siehe Brennstoffzellensystem-Leistungsverlauf 120 im zeitlichen Bereich des ersten Schritts 102). Ein Teil dieser Leistung des Brennstoffzellensystems 12 wird dabei dem elektrischen Anlagenperipherienetz 30 bereitgestellt, wie anhand des Anlagenperipherienetz-Leistungsverlaufs 130 zu erkennen ist.

Nun wird angenommen, dass sich eine Netzstörung 104 als zweiter Schritt des Verfahrens 100, insbesondere ein Netzausfall, des elektrischen Ausgangsnetzes 24 ereignet, sodass das elektrische Ausgangsnetz 24 keine elektrische Energie mehr aus dem elektrischen Zwischenkreis 40 abnehmen kann. Dieses Auftreten der Netzstörung 104 kann vorteilhafterweise durch die Leistungselektronik 54 festgestellt werden, die durch ihren Spannungsmesser eine Spannung in dem elektrischen Zwischenkreis 40 feststellt, die eine vordefinierte Maximalspannung für eine Netzstörung 104 übersteigt, sodass die Netzstörung 104 festgestellt wird.

In einem dritten Schritt 106 des Verfahrens 100 wird daraufhin der elektrische Leistungswiderstand 52 von der Leistungselektronik 54 aktiviert. Die elektrische Energie in dem elektrischen Zwischenkreis 40, die weiter von dem Brennstoffzellensystem 12 erzeugt und in den elektrischen Zwischenkreis 40 eingespeist wird, wird nun dem elektrischen Leistungswiderstand 52 zugeführt, welcher diese in Abwärme umwandelt. Diese Umwandlung geschieht außerhalb des Brennstoffzellensystems 12. Der elektrische Leistungswiderstand 52 wird vorteilhafterweise während seines Betriebs gekühlt, besonders vorteilhaft wassergekühlt.

Parallel zum dritten Schritt 106 oder im Anschluss daran wird ein vierter Schritt 108 des Verfahrens 100 initiiert, bei dem die Lastpunkte der im Betrieb befindlichen Brennstoffzellenstapel 10 nach Feststellen der Netzstörung 104 im Rahmen der seitens der Brennstoffzellenstapel 10 zur Verfügung stehenden Leistungsdynamik heruntergefahren werden. Dadurch wird die von diesen erzeugten elektrische Energie über die Zeit geringer, wie anhand des Brennstoffzellensystem-Leistungsverlaufs 120 im zeitlichen Bereich des dritten Schritts 106 zu erkennen ist. So muss weniger elektrische Energie aus dem elektrischen Zwischenkreis 40 zum elektrischen Leistungswiderstand 52 abgeführt werden.

Wenn die Netzstörung 104 behoben ist, ereignet sich zu einem bestimmten Zeitpunkt die Netzrückkehr 110 des elektrischen Ausgangsnetzes 24 als fünfter Schritt des Verfahrens 100. Das elektrische Ausgangsnetz 24 steht nun wieder zur Einspeisung von elektrischer Energie aus dem elektrischen Zwischenkreis 40 zur Verfügung.

Entsprechend wird die elektrische Energie gemäß einem sechsten Schritt 112 des Verfahrens 100 wieder dem elektrische Ausgangsnetz 24 statt dem elektrischen Leistungswiderstand 52 zugeführt. Der elektrische Leistungswiderstand 52 kann insoweit von der Leistungselektronik 54 abgeschaltet werden. Auch das Feststellen der Netzrückkehr 110 kann dabei durch Spannungsmessung seitens der Leistungselektronik 54 erfolgen. Parallel zum sechsten Schritt 112 oder im Anschluss daran wird ein siebter Schritt 114 des Verfahrens 100 ausgeführt, bei dem die Lastpunkte der im Betrieb befindlichen Brennstoffzellenstapel 10 nach Feststellen der Netzrückkehr 110 im Rahmen der seitens der Brennstoffzellenstapel 10 zur Verfügung stehenden Leistungsdynamik wieder hochgefahren werden.

Figur 4 zeigt eine alternative Ausführungsform einer Brennstoffzellenanlage 1, bei der die Brennstoffzellenstapel 10 des Brennstoffzellensystems 12 beispielhaft in Reihe miteinander verschaltet sind. Hinzu kommt, dass ein gemeinsamer DC/AC-Wandler 22 für das elektrische Ausgangsnetz 24 und die Anlagenperipherie 34 genutzt wird.

Vor allem ist aber der elektrische Leistungswiderstand 52 in keinem elektrischen Zwischenkreis 40, sondern zwischen DC-Anschlüssen der Brennstoffzellenstapel 10 und dem DC/AC-Wandler 22 angeordnet. Die Leistungselektronik 54, die die Steuerung und/oder Regelung des elektrischen Leistungswiderstandes 52 übernimmt, ist dabei vorteilhafterweise Teil des DC/AC-Wandlers 22.

Der elektrische Leistungswiderstand 52 kann also entweder direkt an den DC-Anschlüssen der Brennstoffzellenstapel 10 oder an einem elektrischen Zwischenkreis 40, wie in Fig. 1 und 2 gezeigt, angeschlossen werden. Ein Regelkreis der Regelung kann auf einer eigenen Steuereinheit mit Transistorschaltern für den elektrischen Leistungswiderstand oder auf einem zentralen Steuergerät implementiert werden.

Die voranstehenden Erläuterungen der Ausführungsformen beschreiben die vorliegende Erfindung ausschließlich im Rahmen von Beispielen.

### Bezugszeichenliste

- 1: Brennstoffzellenanlage
- 10: Brennstoffzellenstapel
- 12: Brennstoffzellensystem
- 14: DC/DC-Wandler
- 20: elektrisches Ausgangsnetzsystem
- 22: DC/AC-Wandler (des elektrischen Ausgangsnetzsystems)
- 24: elektrisches Ausgangsnetz
- 30: elektrisches Anlagenperipherienetz
- 32: Wandler (des elektrischen Anlagenperipherienetzes)
- 34: Anlagenperipherie
- 40: elektrischer Zwischenkreis
- 50: elektrisches Leistungswiderstandsnetz
- 52: elektrischer Leistungswiderstand
- 54: Leistungselektronik
- 100: Verfahren
- 102: erster Schritt
- 104: Netzstörung
- 106: dritter Schritt
- 108: vierter Schritt
- 110: Netzrückkehr
- 112: sechster Schritt
- 114: siebter Schritt
- 120: Brennstoffzellensystem-Leistungsverlauf
- 130: Anlagenperipherienetz-Leistungsverlauf

## Patentansprüche

1. Brennstoffzellenanlage (1) mit einem Brennstoffzellensystem (12), umfassend eine Vielzahl von Brennstoffzellenstapeln (10), wobei das Brennstoffzellensystem (12) zum Versorgen eines elektrischen Ausgangsnetzes (24) mit durch den Betrieb der Brennstoffzellenstapel (10) erzeugter elektrischer Energie elektrisch mit einem elektrischen Ausgangsnetzsystem (20), welches ein elektrisches Ausgangsnetz (24) umfasst, verbunden oder verbindbar ist, wobei die Brennstoffzellenanlage (1) ferner ein elektrisches Leistungswiderstandsnetz (50), umfassend einen elektrischen Leistungswiderstand (52) zur Lastpunktsicherstellung der Brennstoffzellenstapel (10) bei Auftreten einer Störung, insbesondere einer Netzstörung (104) des elektrischen Ausgangsnetzsystems (20), wobei das Brennstoffzellensystem (12) zum Versorgen des elektrischen Leistungswiderstandsnetzes (50) mit durch den Betrieb der Brennstoffzellenstapel (10) erzeugter elektrischer Energie elektrisch mit dem elektrischen Leistungswiderstandsnetz (50) verbunden ist, **dadurch gekennzeichnet, dass** das elektrische Leistungswiderstandsnetz (50) in einem elektrischen Zwischenkreis (40) zwischen DC/DC-Wandlern (14) der Brennstoffzellenstapel (10) und einem DC/AC-Wandler (22) des elektrischen Ausgangsnetzsystems (20) angeordnet ist, wobei der DC/AC-Wandler (22) bidirektional ausgebildet und an das elektrische Ausgangsnetz (24) angeschlossen ist, sodass elektrische Energie aus dem elektrischen Zwischenkreis (40) an das elektrische Ausgangsnetz (24) abführbar und aus dem elektrischen Ausgangsnetz (24) in den elektrischen Zwischenkreis (40) einspeisbar ist.

2. Brennstoffzellenanlage (1) nach Anspruch 1, **dadurch gekennzeichnet, dass** der elektrische Leistungswiderstand (52) dazu eingerichtet ist, elektrische Energie in Abwärme umzuwandeln.

3. Brennstoffzellenanlage (1) nach Anspruch 1 oder 2, **dadurch gekennzeichnet, dass** der elektrische Leistungswiderstand (52) außerhalb der Brennstoffzellenstapel (12) angeordnet ist.

4. Brennstoffzellenanlage (1) nach einem der voranstehenden Ansprüche, **dadurch gekennzeichnet, dass** die Brennstoffzellenanlage (1) eine Kühleinheit zum Kühlen des elektrischen Leistungswiderstandes (52) umfasst.

5. Brennstoffzellenanlage (1) nach einem der voranstehenden Ansprüche, **dadurch gekennzeichnet, dass** das elektrische Leistungswiderstandsnetz (50) eine Leistungselektronik (54) umfasst, die dazu eingerichtet ist, den elektrischen Leistungswiderstand (52) beim Auftreten der Netzstörung (104) zu aktivieren.

6. Brennstoffzellenanlage (1) nach Anspruch 5, **dadurch gekennzeichnet, dass** die Leistungselektronik (54) dazu eingerichtet ist, kontinuierlich eine Spannung in einem elektrischen Zwischenkreis (40) zwischen dem Brennstoffzellensystem (12) und dem elektrischen Ausgangsnetzsystem (20) zu messen und beim Auftreten eines Spannungsanstiegs in dem elektrischen Zwischenkreis (40) den elektrischen Leistungswiderstand (52) zu aktivieren.

7. Brennstoffzellenanlage (1) nach Anspruch 6, **dadurch gekennzeichnet, dass** die Leistungselektronik (54) einen Regler zum Regeln der dem elektrischen Leistungswiderstand (52) zugeführten elektrischen Energie in Abhängigkeit von der im elektrischen Zwischenkreis (40) gemessenen Spannung aufweist.

8. Brennstoffzellenanlage (1) nach einem der voranstehenden Ansprüche, **dadurch gekennzeichnet, dass** das Brennstoffzellensystem (12) dazu eingerichtet ist, einen Lastpunkt der im Betrieb befindlichen Brennstoffzellenstapel (10) beim Auftreten der Störung herunterzufahren.

9. Brennstoffzellenanlage (1) nach einem der voranstehenden Ansprüche, **dadurch gekennzeichnet, dass** die Brennstoffzellenanlage (1) ein elektrischen Anlagenperipherienetz (30) umfassend Anlagenperipherie (34) zum Unterstützen eines Betriebs des Brennstoffzellensystems (12) umfasst, wobei das Brennstoffzellensystem (12) zum Versorgen des elektrischen Anlagenperipherienetzes (30) mit der durch den Betrieb der Brennstoffzellenstapel (10) erzeugten elektrischen Energie elektrisch mit dem elektrischen Anlagenperipherienetz (30) verbunden ist.

10. Verfahren (100) zur Lastpunktsicherstellung von Brennstoffzellenstapeln (10) eines Brennstoffzellensystems (12) einer Brennstoffzellenanlage (1) gemäß einem der Ansprüche 1 bis 9 bei Auftreten einer Störung eines elektrischen Ausgangsnetzsystems (20), welches mit durch den Betrieb der Brennstoffzellenstapel (10) erzeugter elektrischer Energie versorgt wird, wobei das Verfahren (100) durch die folgenden Schritte **gekennzeichnet** ist:
- Auftreten der Störung, insbesondere der Netzstörung (104) des elektrischen Ausgangsnetzsystems (20),
- Feststellen der aufgetretenen Störung, insbesondere der Netzstörung (104), und
- Umwandeln von elektrischer Energie in der Brennstoffzellenanlage (1) zwischen dem Brennstoffzellensystem (12) und dem elektrischen Ausgangsnetzsystem (20) mittels eines elektrischen Leistungswiderstands (52) in Abwärme.

11. Verfahren (100) nach Anspruch 10, **dadurch gekennzeichnet, dass** die aufgetretene Störung, insbesondere der Netzstörung (104) durch eine Messung eines Spannungsanstiegs in einem elektrischen Zwischenkreis (40) zwischen dem Brennstoffzellensystem (12) und dem elektrischen Ausgangsnetzsystem (20) festgestellt wird.

12. Verfahren (100) nach Anspruch 11, **dadurch gekennzeichnet, dass** die von dem elektrischen Leistungswiderstand (52) umgewandelte elektrischen Energie in Abhängigkeit von der im elektrischen Zwischenkreis (40) gemessenen Spannung geregelt wird.

13. Verfahren (100) nach einem der Ansprüche 10 bis 12, **dadurch gekennzeichnet, dass** die Lastpunkte der im Betrieb befindlichen Brennstoffzellenstapel (10) nach Feststellen der Störung, insbesondere der Netzstörung (104) im Rahmen der seitens der Brennstoffzellenstapel (10) zur Verfügung stehenden Leistungsdynamik heruntergefahren werden.

## Claims

1. A fuel cell plant (1) having a fuel cell system (12) comprising a plurality of fuel cell stacks (10), the fuel cell system (12) being electrically connected or connectable to an electrical output network (20) for supplying an electrical output network (24) with electrical energy generated by the operation of the fuel cell stacks (10), wherein the fuel cell plant (1) further comprises an electrical power resistor network (50) comprising an electrical power resistor (52) for load protection of the fuel cell stacks (10) in the event of a fault, in particular a network fault (104) of the electrical output network system (20), wherein the fuel cell system (12) is electrically connected to the electrical power resistor network (50) for supplying the electrical power resistor network (50) with electrical energy generated by the operation of the fuel cell stacks (10), **characterised in that** the electrical power resistor network (50) is arranged in an electrical intermediate circuit (40) between DC/DC converters (14) of the fuel cell stacks (10) and a DC/AC converter (22) of the electrical output network system (20), wherein the DC/AC converter (22) has a bidirectional design and is connected to the electrical output network (24), so that electrical energy can be discharged from the electrical intermediate circuit (40) to the electrical output network (24) and fed from the electrical output network (24) into the electrical intermediate circuit (40).

2. Fuel cell system (1) according to claim 1, **characterised in that** the electrical power resistor (52) is set up to convert electrical energy into waste heat.

3. Fuel cell system (1) according to claim 1 or 2, **characterised in that** the electrical power resistor (52) is arranged outside the fuel cell stacks (12).

4. Fuel cell system (1) according to one of the preceding claims, **characterised in that** the fuel cell system (1) comprises a cooling unit for cooling the electrical power resistor (52).

5. Fuel cell system (1) according to one of the preceding claims, **characterised in that** the electrical power resistor network (50) comprises power electronics (54) which are set up to activate the electrical power resistor (52) when the network fault (104) occurs.

6. Fuel cell system (1) according to claim 5, **characterised in that** the power electronics (54) are set up to continuously measure a voltage in an electrical intermediate circuit (40) between the fuel cell system (12) and the electrical output network system (20) and to activate the electrical power resistor (52) when a voltage rise occurs in the electrical intermediate circuit (40).

7. Fuel cell system (1) according to claim 6, **characterised in that** the power electronics (54) has a controller for regulating the electrical energy supplied to the electrical power resistor (52) as a function of the voltage measured in the electrical intermediate circuit (40).

8. Fuel cell system (1) according to one of the preceding claims, **characterised in that** the fuel cell system (12) is set up to shut down a load point of the fuel cell stacks (10) in operation when the fault occurs.

9. Fuel cell system (1) according to one of the preceding claims, **characterised in that** the fuel cell system (1) comprises an electrical system peripheral network (30) comprising system peripherals (34) for supporting an operation of the fuel cell system (12), wherein the fuel cell system (12) is electrically connected to the electrical system peripheral network (30) for supplying the electrical system peripheral network (30) with the electrical energy generated by the operation of the fuel cell stacks (10).

10. Method (100) for load point protection of fuel cell stacks (10) of a fuel cell system (12) of a fuel cell plant (1) according to one of claims 1 to 9 upon occurrence of a fault of an electrical output network system (20) which is supplied with electrical energy generated by the operation of the fuel cell stacks (10), the method (100) being **characterised by** the following steps:
- occurrence of the fault, in particular the mains fault (104) of the electrical output mains system (20),
- detecting the fault that has occurred, in particular the mains fault (104), and
- converting electrical energy in the fuel cell system (1) between the fuel cell system (12) and the electrical output grid system (20) into waste heat by means of an electrical power resistor (52).

11. Method (100) according to claim 10, **characterised in that** the fault that has occurred, in particular the network fault (104), is detected by measuring a voltage rise in an electrical intermediate circuit (40) between the fuel cell system (12) and the electrical output network system (20).

12. Method (100) according to claim 11, **characterised in that** the electrical energy converted by the electrical power resistor (52) is regulated as a function of the voltage measured in the electrical intermediate circuit (40).

13. Method (100) according to one of claims 10 to 12, **characterised in that** the load points of the fuel cell stacks (10) in operation are reduced within the scope of the power dynamics available on the part of the fuel cell stacks (10) after the fault, in particular the grid fault (104), has been detected.

## Revendications

1. Installation de piles à combustible (1) avec un système de piles à combustible (12), comprenant une pluralité d'empilements de piles à combustible (10), le système de piles à combustible (12) étant relié électriquement à un système de réseau de sortie électrique (20) pour alimenter un réseau de sortie électrique (24) avec de l'énergie électrique générée par le fonctionnement des empilements de piles à combustible (10), qui comprend un réseau de sortie électrique (24), l'installation de piles à combustible (1) étant en outre reliée ou pouvant être reliée à un réseau de résistances de puissance électrique (50), comprenant une résistance de puissance électrique (52) pour la protection du point de charge des empilements de piles à combustible (10) en cas d'apparition d'une perturbation, en particulier d'une perturbation de réseau (104) du système de réseau de sortie électrique (20), le système de piles à combustible (12) étant relié électriquement au réseau de résistances de puissance électrique (50) pour alimenter le réseau de résistances de puissance électrique (50) en énergie électrique générée par le fonctionnement des empilements de piles à combustible (10), **caractérisé en ce que** le réseau de résistances de puissance électrique (50) est disposé dans un circuit électrique intermédiaire (40) entre des convertisseurs DC/DC (14) des empilements de piles à combustible (10) et un convertisseur DC/AC (22) du système de réseau de sortie électrique (20), le convertisseur DC/AC (22) étant réalisé de manière bidirectionnelle et étant raccordé au réseau électrique de sortie (24), de sorte que de l'énergie électrique peut être évacuée du circuit électrique intermédiaire (40) vers le réseau électrique de sortie (24) et peut être injectée dans le circuit électrique intermédiaire (40) à partir du réseau électrique de sortie (24).

2. Installation de piles à combustible (1) selon la revendication 1, **caractérisée en ce que** la résistance électrique de puissance (52) est adaptée pour convertir l'énergie électrique en chaleur perdue.

3. Installation de piles à combustible (1) selon la revendication 1 ou 2, **caractérisée en ce que** la résistance électrique de puissance (52) est disposée à l'extérieur de l'empilement de piles à combustible (12).

4. Installation de pile à combustible (1) selon l'une des revendications précédentes, **caractérisée en ce que** l'installation de pile à combustible (1) comprend une unité de refroidissement pour refroidir la résistance électrique de puissance (52).

5. Installation de piles à combustible (1) selon l'une des revendications précédentes, **caractérisée en ce que** le réseau de résistances électriques de puissance (50) comprend une électronique de puissance (54) qui est adaptée pour activer la résistance électrique de puissance (52) lors de l'apparition de la perturbation du réseau (104).

6. Installation de pile à combustible (1) selon la revendication 5, **caractérisée en ce que** l'électronique de puissance (54) est agencée pour mesurer en continu une tension dans un circuit électrique intermédiaire (40) entre le système de pile à combustible (12) et le système de réseau électrique de sortie (20) et pour activer la résistance électrique de puissance (52) lors de l'apparition d'une augmentation de tension dans le circuit électrique intermédiaire (40).

7. Installation de pile à combustible (1) selon la revendication 6, **caractérisée en ce que** l'électronique de puissance (54) présente un régulateur pour réguler l'énergie électrique amenée à la résistance électrique de puissance (52) en fonction de la tension mesurée dans le circuit électrique intermédiaire (40).

8. Installation de piles à combustible (1) selon l'une des revendications précédentes, **caractérisée en ce que** le système de piles à combustible (12) est agencé pour abaisser un point de charge des piles à combustible (10) en fonctionnement lors de l'apparition de la panne.

9. Installation de piles à combustible (1) selon l'une des revendications précédentes, **caractérisée en ce que** l'installation de piles à combustible (1) comprend un réseau périphérique d'installation électrique (30) comprenant des périphériques d'installation (34) pour soutenir un fonctionnement du système de piles à combustible (12), le système de piles à combustible (12) étant relié électriquement au réseau périphérique d'installation électrique (30) pour alimenter le réseau périphérique d'installation électrique (30) avec l'énergie électrique générée par le fonctionnement des piles à combustible empilées (10).

10. Procédé (100) de sécurisation du point de charge d'empilements de piles à combustible (10) d'un système de piles à combustible (12) d'une installation de piles à combustible (1) selon l'une des revendications 1 à 9, lors de l'apparition d'une perturbation d'un système de réseau électrique de sortie (20) qui est alimenté en énergie électrique générée par le fonctionnement des empilements de piles à combustible (10), le procédé (100) étant **caractérisé par** les étapes suivantes:
- apparition de la panne, en particulier de la panne de réseau (104) du système de réseau électrique de sortie (20),
- la constatation de la perturbation survenue, en particulier de la perturbation du réseau (104), et
- convertir l'énergie électrique dans l'installation de piles à combustible (1) entre le système de piles à combustible (12) et le système de réseau électrique de sortie (20) en chaleur perdue au moyen d'une résistance électrique de puissance (52).

11. Procédé (100) selon la revendication 10, **caractérisé en ce que** la perturbation survenue, en particulier la perturbation du réseau (104), est détectée par une mesure d'une augmentation de tension dans un circuit électrique intermédiaire (40) entre le système de piles à combustible (12) et le système de réseau électrique de sortie (20).

12. Procédé (100) selon la revendication 11, **caractérisé en ce que** l'énergie électrique convertie par la résistance électrique de puissance (52) est régulée en fonction de la tension mesurée dans le circuit électrique intermédiaire (40).

13. Procédé (100) selon l'une des revendications 10 à 12, **caractérisé en ce que** les points de charge des piles à combustible (10) en fonctionnement sont abaissés après constatation de la panne, notamment de la panne de réseau (104), dans le cadre de la dynamique de puissance disponible du côté des piles à combustible (10).
